**Europäisches Patentamt**

**European Patent Office**

**Office européen des brevets**

(19)

(11) Veröffentlichungsnummer: **0 300 208 B1**

(12) **EUROPÄISCHE PATENTSCHRIFT**

(45) Veröffentlichungstag der Patentschrift: **15.04.92**

(51) Int. Cl.⁵: **B62D 11/12**

(21) Anmeldenummer: **88109813.1**

(22) Anmeldetag: **20.06.88**

(54) **Steuerungseinrichtung für den Fahr- und Lenkbetrieb von Kraftfahrzeugen mit auf jeder Fahrzeuglängsseite angeordneten, einzeln antreibbaren Laufwerken.**

(30) Priorität: **20.07.87 DE 3723965**

(43) Veröffentlichungstag der Anmeldung:
**25.01.89 Patentblatt 89/04**

(45) Bekanntmachung des Hinweises auf die
Patenterteilung:
**15.04.92 Patentblatt 92/16**

(84) Benannte Vertragsstaaten:
**AT BE CH DE ES FR GB GR IT LI LU NL SE**

(56) Entgegenhaltungen:
**EP-A- 0 069 369**
**AT-B- 317 692**
**DE-B- 1 505 677**
**US-A- 2 941 609**
**US-A- 3 876 021**

(73) Patentinhaber: **AGRIA-WERKE GMBH**

**W-7108 Möckmühl(DE)**

(72) Erfinder: **Saur, Niko Karolo**
**Bittelbronner Strasse 38**
**W-7109 Roigheim(DE)**
Erfinder: **Bronner, Wolfgang**
**Dorfstrasse 20**
**W-6956 Neudenau-Kressbach(DE)**

(74) Vertreter: **Haug, Dietmar et al**
**Patentanwälte Andrae, Flach, Haug, Kneissl**
**Balanstrasse 55**
**W-8000 München 90(DE)**

## Beschreibung

Die Erfindung betrifft eine Steuerungseinrichtung für den Fahr- und Lenkbetrieb von Kraftfahrzeugen gemäß dem Oberbegriff des Patentanspruches 1.

Eine solche Steuerungseinrichtung ist aus der US-A-2 941 609 bekannt. Bei dem in Figur 1 dieser Druckschrift gezeigten ersten Ausführungsbeispiel ist das als T-förmiger Hebel ausgebildete Betätigungsteil um eine feststehende, durch einen Zapfen gebildete Drehachse drehbar. An den beiden Enden des Querbalkens dieses Hebels sind zwei zweiarmige Hebel drehbar gelagert, die mit ihren äußeren Enden mit Steuerstangen gelenkig verbunden sind und die an ihren inneren Enden durch einen weiteren Zapfen miteinander verbunden sind, an dem noch eine Stange befestigt ist, die durch einen Schalthebel axial verschiebbar ist. Der T-förmige Hebel ist durch ein Lenkrad um seine Drehachse drehbar.

Wird der Schalthebel nach vorne bewegt, um das Fahrzeug vorwärts zu bewegen, werden die Stange und damit der weitere Zapfen nach rückwärts gezogen, wodurch die zweiarmigen Hebel gegensinnig um ihre Drehpunkte gedreht und die Steuerstangen gleichsinnig vorwärts gestoßen werden.

Soll nun das Fahrzeug bei der Vorwärtsfahrt eine Rechtskurve machen, wird das Lenkrad im Uhrzeigersinn gedreht. Diese Drehung hat zur Folge, daß der T-förmige Hebel ebenfalls im Uhrzeigersinn gedreht wird, wodurch der Drehpunkt des einen Hebels und infolgedessen die eine Steuerstange nach vorne und der Drehpunkt des anderen Hebels und infolgedessen die andere Steuerstange nach hinten bewegt werden. Hierdurch entstehen unterschiedlich große Vorwärtsgeschwindigkeiten der Laufwerke, so daß sich das Fahrzeug in einer Rechtskurve bewegt. Zum Erzielen einer Linkskurve wird das Lenkrad im Gegenuhrzeigersinn gedreht, und es tritt die entgegengesetzte Wirkung ein.

Wenn sich der Schalthebel in der Neutralstellung befindet, kann durch Drehen des Lenkrads im Uhrzeigersinn oder im Gegenuhrzeigersinn eine Drehung des Fahrzeugs um eine zentrale Achse erzeugt werden, ohne daß eine Fortbewegung nach rückwärts oder vorwärts erfolgt. Soll sich z.B. das Fahrzeug nach rechts drehen, wird das Lenkrad im Uhrzeigersinn gedreht. Diese Drehung hat zur Folge, daß der T-förmige Hebel um seine Drehachse im Uhrzeigersinn gedreht wird. Die Drehung des T-förmigen Hebels im Uhrzeigersinn hat wiederum zur Folge, daß der eine Drehpunkt und infolgedessen der eine Hebel und damit die eine Steuerstange nach vorne bewegt werden. Dagegen werden der andere Drehpunkt und der andere Hebel zusammen mit der anderen Steuerstange nach hinten bewegt. Das rechte Laufwerk wird infolgedessen rückwärts bewegt, während das linke Laufwerk vorwärts bewegt wird. Das Fahrzeug dreht sich somit im Stand nach rechts um eine zentrale Achse.

Die bekannte Steuereinrichtung gemäß dem ersten Ausführungsbeispiel erfordert somit mindestens ein um eine feststehende Achse drehbares Betätigungsteil, zwei gegensinnig drehbare, auf dem Betätigungsteil drehbar gelagerte, zweiarmige Hebel und eine Schub- oder Zugstange zum Drehen der zweiarmigen Hebel. Diese große Anzahl von beweglichen Teilen und Lagerstellen bringen in die Steuereinrichtung ein erhebliches Spiel ein, das die Steuerbewegungen der Steuereinrichtung unpräzise und die Steuereinrichtung verschleißanfällig macht.

Auch die Steuereinrichtung nach dem zweiten Ausführungsbeispiel der bekannten Steuereinrichtung weist eine Vielzahl von beweglichen Teilen und Lagerstellen auf, die in der Summe ein erhebliches Spiel in der Steuereinrichtung ergeben. Darüber hinaus ermöglicht diese Steuereinrichtung nicht die Drehung des Fahrzeugs im Stand um eine zentrale Achse. Das Betätigungsteil dieser Steuereinrichtung ist ein Drehzapfen, der in einem Schlitz eines Führungsteils verschiebbar gelagert ist, das um eine feststehende Achse drehbar ist. Der Drehzapfen verbindet die inneren Enden von zwei Hebeln, deren äußere Enden mit den inneren Armen von zwei Kniehebeln verbunden sind, die jeweils um eine feststehende Achse drehbar gelagert sind. Die äußeren Arme der Kniehebel sind mit Steuerstangen verbunden. Der Drehzapfen ist ferner mit einer Schub- und Zugstange verbunden, die an einen Schalthebel angeschlossen ist. Das drehbare Führungsteil ist durch ein Lenkrad drehantreibbar.

In der neutralen Stellung des Schalthebels fallen die Achsen des Drehzapfens und des Führungsteiles zusammen. Eine Drehung des Lenkrads in der neutralen Stellung des Schalthebels bewirkt zwar eine Drehung des Führungsteiles, aber keine Bewegung der Steuerstangen. Zum Vorwärts- oder Rückwärtsfahren wird der Schalthebel in die entsprechende Stellung gebracht. Hierdurch wird der Drehzapfen innerhalb des Schlitzes in dem Führungsteil verschoben, wodurch die Hebel und infolgedessen die Kniehebel und somit die Steuerstangen bewegt werden. Wird der Schalthebel beispielsweise vorwärts bewegt, werden die Steuerstangen gleichsinnig rückwärts bewegt. Ist der Drehzapfen von der Drehachse des Führungsteiles entfernt, wird er bei einer Drehung des Führungsteiles um dessen Drehachse bewegt. Die Drehung des Drehzapfens um die Drehachse des Führungsteiles bewirkt eine gegensinnige Verschiebung der Steuerstangen und infolgedessen eine Kurvenfahrt.

Die Aufgabe der Erfindung besteht in der Schaffung einer gattungsgemäßen Steuereinrichtung, die mit weniger beweglichen Teilen auskommt, so daß sie mit weniger Spiel behaftet ist und infolgedessen die Steuerbewegungen präziser sind, wobei eine gegensinnige Bewegung der Laufwerke für eine Drehung des Fahrzeugs im Stand um eine zentrale Achse gewährleistet ist.

Die Aufgabe der Erfindung wird mit den Merkmalen des kennzeichnenden Teiles des Patentanspruches 1 gelöst.

Beide Bewegungen des Betätigungsteiles, nämlich Verschwenken und Verschieben, können zugleich und überlagert ausgeführt werden, so daß Geschwindigkeitsänderungen und Fahrtrichtungsänderungen gleichzeitig oder unabhängig voneinander und in der gewünschten Größe durchgeführt werden können.

Ein besonders einfacher Aufbau der erfindungsgemäßen Steuerungseinrichtung ergibt sich durch die Merkmale des Patentanspruches 2.

Die Merkmale des Patentanspruches 4 erbringen den Vorteil einer einfachen Konstruktion und einer hohen Bedienungsfreundlichkeit der Steuerungseinrichtung.

Die Merkmale des Patentanspruches 5 haben zur Folge, daß bei Lenkbewegungen, die durch Drehen des anderen Stellteiles eingeleitet werden, der zweiarmige Hebel translatorisch bewegt wird und die Verstellglieder der beiden Antriebseinrichtungen gleichsinnig betätigt werden. Änderungen von Vorwärts- auf Rückwärtsfahrt und umgekehrt sowie Fahrgeschwindigkeitsänderungen werden hingegen durch Verstellen des Einstellteiles ausgelöst, wobei der zweiarmige Hebel verdreht wird und die Verstellglieder der beiden Antriebseinrichtungen gegensinnig bewegt werden. Ein derartiger Anschluß der beiden Stellteile an die Verstellglieder der beiden Antriebseinrichtungen hat den Vorteil, daß Lenkbewegungen sehr präzise ausgeführt werden können.

Ein besonders gutes Lenk- und Fahrverhalten des mit der erfindungsgemäßen Steuerungseinrichtung ausgerüsteten Fahrzeugs sowie ein wirtschaftlicher Betrieb dieses Fahrzeugs ergeben sich durch die Merkmale des Patentanspruches 7. Die für den Antrieb der Hydraulikpumpen erforderliche Antriebsmaschine kann dann für die Fahr- und Lenkbewegungen mit einer weitgehend konstanten Drehzahl in einem günstigen Bereich betrieben werden.

Die erfindungsgemäße Steuerungseinrichtung eignet sich besonders für den Einsatz in einem Kraftfahrzeug, das die Merkmale des Patentanspruches 8 aufweist. Bei einer Lenkbewegung, die durch den unterschiedlichen Antrieb der beiden Triebräder erfolgt, verschwenken sich dann die Stützräder selbsttätig.

Die erfindungsgemäße Steuerungseinrichtung kann aber auch mit Erfolg in einachsigen oder anderen zweiachsigen oder mehrachsigen Fahrzeugen, wobei nur eine Achse angetrieben wird und Seitenführungskräfte überträgt, oder in Fahrzeugen mit Raupenketten verwendet werden. Beispielsweise kann die erfindungsgemäße Steuerungseinrichtung bei Pistenraupen, Radlader, Bagger und dergleichen eingesetzt werden.

Ein Ausführungsbeispiel der Erfindung ist in den Zeichnungen dargestellt und wird im folgenden näher beschrieben. Es zeigt

Fig. 1 eine perspektivische Darstellung einer Steuerungseinrichtung im eingebauten Zustand in einem dreirädrigen Kraftfahrzeug,

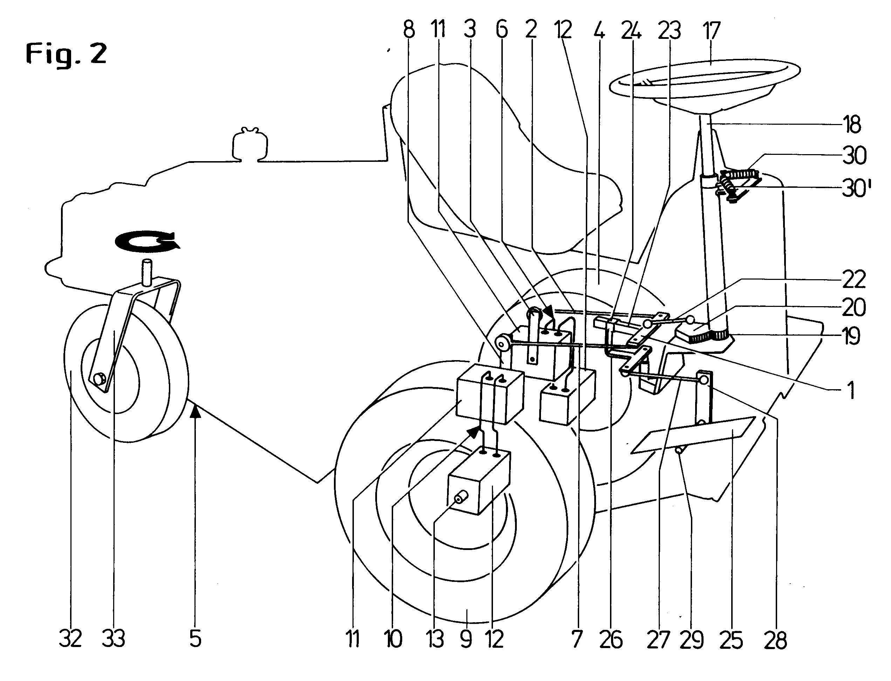

Fig. 2 eine schematisierte Darstellung des dreirädrigen Fahrzeugs und der eingebauten Steuerungseinrichtung, wobei die Steuerungseinrichtung gegenüber der in Fig. 1 gezeigten Steuerungseinrichtung aus Gründen der Übersichtlichkeit vereinfacht dargestellt ist, und

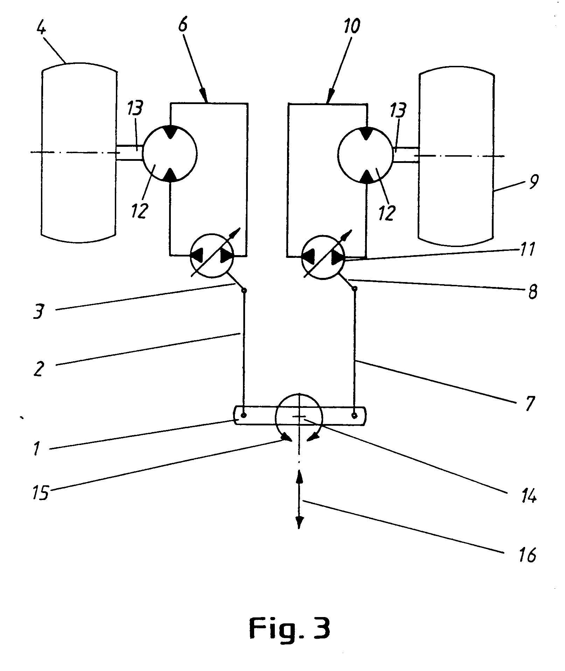

Fig. 3 eine schematisierte und vereinfachte Darstellung der Steuerungseinrichtung nach der Erfindung im eingebauten Zustand in dem dreirädrigen Fahrzeug, wobei auch die beiden als Antriebseinrichtungen dienenden hydrostatischen Getriebe schematisiert dargestellt sind.

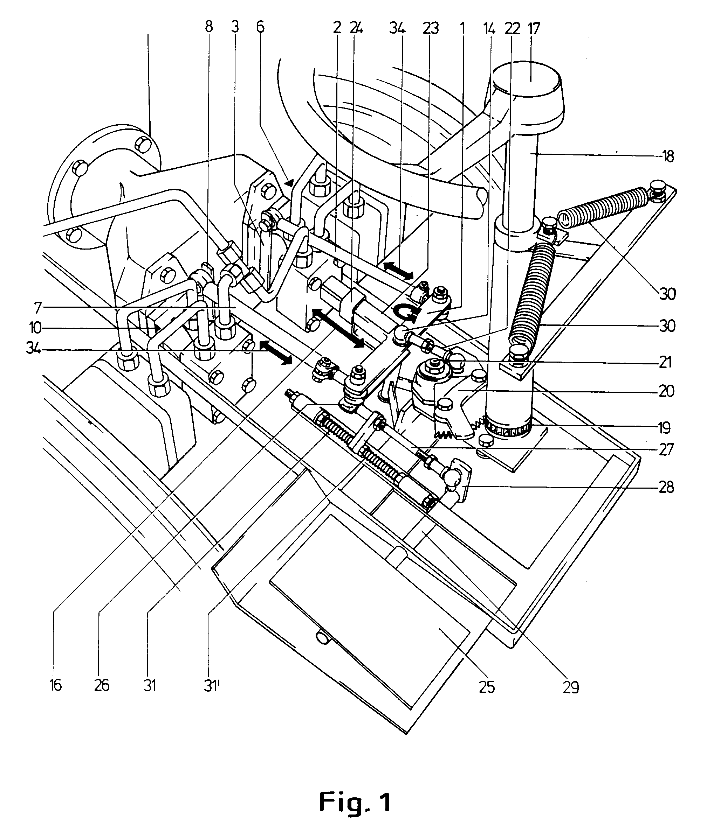

Wie besonders aus Fig. 1 ersichtlich ist, weist eine Steuerungseinrichtung nach der Erfindung einen zweiarmigen Hebel 1 auf, dessen einer Arm über eine Verbindungsstange 2 mit dem Verstellhebel 3 eines auf das linke vordere Triebrad 4 eines dreirädrigen Fahrzeuges 5 wirkenden hydrostatischen Getriebes 6 gelenkig verbunden ist. Der andere Arm des zweiarmigen Hebels 1 ist in entsprechender Weise über eine Verbindungsstange 7 mit dem Verstellhebel 8 eines auf das rechte vordere Triebrad 9 wirkenden hydrostatischen Getriebes 10 gelenkig verbunden. Jedes der beiden hydrostatischen Getriebe 6, 10 hat einen an sich bekannten Aufbau und besteht aus einer mit dem jeweiligen Verstellhebel 3,8 regelbaren Hydraulikpumpe 11 und einem mit der Pumpe 11 über Hydraulikleitungen verbundenen Hydraulikmotor 12, dessen Ausgangswelle 13 mit dem jeweiligen Triebrad 4, 9 des dreirädrigen Fahrzeugs 5 verbunden ist. Die Pumpen 11 der hydrostatischen Getriebe 6, 10 werden von einem in dem Fahrzeug 5 nicht dargestellten Verbrennungsmotor angetrieben, der zugleich zum Antrieb von an das Fahrzeug 5 anschließbaren Anbaugeräten, wie Mähwerken, dient.

Die Pumpe 11 und der Hydraulikmotor 12 eines jeden hydrostatischen Getriebes 6, 10 sind so miteinander verbunden, daß bei einer gleichsinnigen Bewegung der Verstellhebel 3,8 nur eines der beiden Antriebsräder in Vorwärtsrichtung angetrieben wird, während das jeweils andere Antriebsrad gebremst oder rückwärts angetrieben wird, so daß das Fahrzeug 5 um seine Hochachse eine Drehung ausführt, die eine Fahrtrichtungsänderung zur Folge hat. Eine gegensinnige Bewegung der Verstellhebel 3, 8 hingegen bewirkt eine Erhöhung oder Verminderung der Drehzahl beider Antriebsräder 4, 9 um den gleichen Betrag, so daß das Fahrzeug seine Geschwindigkeit ändert.

Der zweiarmige Hebel 1 ist sowohl um eine vertikale Achse 14 in der einen oder anderen durch den Doppelpfeil 15 angegebenen Richtung drehbar als auch senkrecht zu der Drehachse 14 in der einen oder anderen durch den Doppelpfeil 16 angegebenen Richtung verschiebbar, wobei eine Drehung des zweiarmigen Hebels 1 eine gegensinnige Bewegung der Verstellhebel 3, 8 der hydrostatischen Getriebe 6,10 in der einen oder anderen Richtung der Doppelpfeile 34 und damit eine Geschwindigkeitsänderung des Fahrzeugs 5 bewirkt, und wobei eine Verschiebung des zweiarmigen Hebels 1 in der einen oder anderen Richtung des Doppelpfeiles 16 eine gleichsinnige Bewegung der Verstellhebel 3, 8 der hydrostatischen Getriebe 6,10 und damit in der einen oder anderen Richtung der Doppelpfeile 34 eine Fahrtrichtungsänderung des Fahrzeugs 5 bewirkt.

Die Verschiebung des zweiarmigen Hebels 1 wird durch eine Lenkvorrichtung 17 (das andere Stellteil) bewirkt, die im dargestellten Beispiel als Lenkrad ausgeführt ist und mit dem zweiarmigen Hebel 1 wie folgt verbunden ist.

Eine drehbare Welle 18, an deren einem Ende die als Lenkrad ausgeführte Lenkvorrichtung 17 befestigt ist, trägt an ihrem anderen Ende ein Zahnritzel 19, das in die am Rand eines kreissegmentförmigen Getriebeteiles 20 angeordneten Zähne eingreift. Das Getriebeteil 20 ist um eine parallel zu der Drehachse 14 des zweiarmigen Hebels 1 verlaufenden Achse 21 des Getriebeteiles 20 drehbar. Eine Schub- und Zugstange 22 ist mit ihrem einen Ende an einer von der Drehachse 21 des Getriebeteiles 20 entfernten Stelle gelenkig mit dem Getriebeteil 20 verbunden. Mit ihrem anderen Ende ist die Schub- und Zugstange 22 genau auf der Drehachse 14 des Zweiarmigen Hebels 1 an diesen angelenkt. Der zweiarmige Hebel 1 weist ein stangenförmiges Gleitstück 23 auf, das in einer Führungshülse 24 verschiebbar gelagert ist.

Die Drehachsen 14 und 21 müssen allerdings nicht zwangsläufig parallel zueinander sein; durch die Verwendung von Kugelköpfen an der Schub- und Zugstange 22 können Winkelabweichungen bis zu ca. 25° zwischen diesen beiden Drehachsen 14 und 21 zugelassen werden.

Durch eine Drehung des Lenkrades wird somit die Welle 18 und damit das Ritzel 19 gedreht, wodurch eine Drehung des Getriebeteiles 20 um die Drehachse 21 bewirkt wird. Durch die Drehung des Getriebeteiles 20 wird die Schub- und Zugstange 22 bewegt, was eine Verschiebung des zweiarmigen Hebels 1 in der entsprechenden Richtung des Doppelpfeiles 16 zur Folge hat, wobei der zweiarmige Hebel 1 durch die Lagerung des Gleitstücks 23 in der Führungshülse 24 geführt wird.

Um den zweiarmigen Hebel 1 um seine Drehachse 14 zu drehen, ist er mit einer Fahrsteuerungsvorrichtung 25 (das eine Stellteil), die im dargestellten Beispiel als Fußpedal in Form einer Wippe ausgeführt ist, wie folgt verbunden.

Wie beschrieben, ist das Gleitstück 23 in der Führungshülse 24 verschiebbar gelagert, die ihrerseits an einem Schwenkhebel 26 befestigt ist, der um eine zu der Drehachse 14 des zweiarmigen Hebels 1 parallelen, relativ zu dieser Drehachse 14 feststehenden Achse drehbar ist. Die Führungshülse 24 ist somit auf einer Kreisbahn um die Drehachse des Schwenkhebels 26 drehbar, wobei sie bei einer Drehung das Gleitstück 23 mitnimmt und den zweiarmigen Hebel 1 dreht. Der Schwenkhebel 26 ist an einem von seiner Drehachse entfernten Ende mit dem Ende einer Schub- und Zugstange 27 gelenkig verbunden. Mit dem anderen Ende ist die Schub- und Zugstange 27 an einem Ende eines Dreharmes 28 angelenkt, der mit seinem anderen Ende an einem Ende einer drehbaren Welle 29 befestigt ist, an der die als Fußpedal ausgeführte Fahrsteuerungsvorrichtung 25 befestigt ist.

Durch Niederdrücken des Fußpedales wird die Welle 29 und damit der Dreharm 28 gedreht. Durch die Drehung des Dreharmes 28 wird die Schub- und Zugstange 27 verschoben und der Schwenkhebel 26 mit der Führungshülse 24 gedreht. Das Gleitstück 23 überträgt die Drehung der Führungshülse 24 auf den zweiarmigen Hebel 1, so daß sich dieser in der entsprechenden Richtung des Doppelpfeiles 15 dreht.

Die Dreh- und Translationsbewegungen des zweiarmigen Hebels 1 können überlagert werden, so daß Geschwindigkeits- und Fahrtrichtungsänderungen des Fahrzeugs gleichzeitig ausgeführt werden können.

An der mit dem Lenkrad verbundenen Welle 18 greifen zwei in entgegengesetzter Richtung wirkende Federn 30, 30′ an, so daß die Welle 18 und damit das Lenkrad 17 nach einer Auslenkung und beim Loslassen in eine Mittelstellung zurückgeführt werden, in welcher das Fahrzeug wieder geradeausfährt. Durch diese zwangsweise Rückführung des Lenkrades in die Mittelstellung wird ein sicheres Fahrverhalten gewährleistet.

Entgegengesetzt wirkende Federn 31, 31′ greifen auch an der Schub- und Zugstange 27 derart an, daß die Schub- und Zugstange 27 und damit das Fußpedal nach einer Auslenkung und beim Loslassen des Fußpedals in eine Nullstellung zurückgeführt werden, in welcher keine Antriebskraft auf die Räder 4, 9 wirkt.

Dadurch daß das Fußpedal als Wippe ausgeführt ist, kann durch eine Betätigung des Fußpedals in der entsprechenden Richtung über die Nullstellung hinaus sowohl Vorwärts-als auch Rückwärtsfahrt des Fahrzeugs 5 mit dem Fußpedal geschwindigkeitsmäßig gesteuert werden.

Wenn gewünscht, kann die Fahrsteuerungsvorrichtung 25 auch als ein mit der Hand betätigbarer Fahrhebel ausgeführt werden. Anstelle eines Lenkrades kann auch ein Steuerhorn verwendet werden.

Die erfindungsgemäße Steuerungseinrichtung kann alternativ auch so ausgeführt werden, daß Lenkbewegungen durch Verdrehen des zweiarmigen Hebels 1 und Fahrbewegungen durch Verschieben des zweiarmigen Hebels 1 ausgeführt werden. Anstelle des zweiarmigen Hebels kann auch ein anderes Betätigungsteil, wie z.B. eine Scheibe oder eine Gelenkgabel, verwendet werden. Wesentlich dabei ist nur, daß mit dem Betätigungsteil sowohl eine gleichsinnige als auch eine gegensinnige Verstellung der Verstellhebel der beiden hydrostatischen Getriebe ermöglicht wird.

Das Fahrzeug 5, das mit der erfindungsgemäßen Steuerungseinrichtung ausgerüstet ist, hat ein einzelnes hinteres Stützrad 32, das zwischen den Armen einer Gabel 33 frei drehbar gelagert ist, die ihrerseits um eine senkrecht zu der Drehachse des Stützrades 32 verlaufenden vertikalen Achse frei verschwenkbar ist, die, in Fahrtrichtung gesehen, vor der Drehachse des Stützrades 32 liegt. Bei einer durch unterschiedliches Antreiben der beiden vorderen Triebräder 4, 9 bewirkten Fahrtrichtungsänderung des Fahrzeugs 5 verschwenkt sich das Stützrad 32 selbsttätig. Wird das Fahrzeug 5 rückwärtsgefahren, nachdem es zuvor vorwärtsbewegt wurde, dreht sich das Stützrad 32 um 180° um die Schwenkachse der Gabel 33, so daß die Drehachse des Stützrades 32, in Fahrtrichtung gesehen, wieder hinter der Schwenkachse der Gabel 33 liegt.

Es ist auch möglich, zwei oder mehr frei drehbare nachlaufende Räder zu verwenden, wichtig ist nur, daß die nachlaufenden Räder nicht selbst spuren.

Die erfindungsgemäße Steuerungseinrichtung verleiht dem dreirädrigen Fahrzeug, bei dem das Stützrad nicht angetrieben ist und frei pendeln kann, eine hohe Wendigkeit und ausgezeichnete Bedienungsfreundlichkeit. Wenn das Fahrzeug mit einem Mähwerk als Anbaugerät ausgerüstet ist und zum Mähen von Rasenflächen eingesetzt wird, ist nicht nur die hohe Wendigkeit, sondern auch die Tatsache von großem Vorteil, daß Fahr- und Lenkbewegungen unter größter Schonung der Rasenfläche durchführbar sind. Selbst beim Wenden des Fahrzeugs auf engstem Raum treten an allen Rädern Rollbewegungen auf, denn die beiden Antriebsräder können ja gegensinnig zueinander betrieben werden. Besonders bei großer Reifenbreite ist diese Fähigkeit des Fahrzeugs für die Schonung der Rasenfläche von großer Bedeutung.

**Patentansprüche**

1. Steuerungseinrichtung für den Fahr- und Lenkbetrieb von Kraftfahrzeugen mit auf jeder Fahrzeuglängsseite angeordneten, einzeln antreibbaren Laufwerken, mit zwei durch jeweils ein bewegliches Verstellglied (3,8) in der an das jeweilige Laufwerk abgegebenen Antriebsleistung und in der Antriebsrichtung veränderbaren Antriebseinrichtungen (6,10) und zwei mit jeweils beiden Verstellgliedern (3,8) über ein um eine eigene Drehachse drehbares Betätigungsteil (1) verbundenen Stellteilen (17,25), wobei das Betätigungsteil (1) durch eines (25) der Stellteile drehantreibbar und mit den Verstellgliedern (3,8) an zwei voneinander entfernten Stellen verbunden ist, die sich bei einer Drehung des Betätigungsteiles (1) um seine Drehachse (14) gegensinnig bewegen, und wobei durch Verstellen des einen Stellteiles (17) sich das Betätigungsteil (1) dreht und sich die Verstellglieder (3,8) gegensinnig bewegen und durch Verstellen des anderen Stellteiles (25) sich die Verstellglieder (3,8) gleichsinnig bewegen, dadurch gekennzeichnet, daß das Betätigungsteil (1) gemeinsam mit seiner Drehachse (14) in einer zu seiner Drehachse (14) senkrechten Richtung durch das andere Stellteil (17) translatorisch bewegbar ist, wobei es von einem durch das eine Stellteil (25) drehantreibbaren Führungsteil (24) geführt ist und sich die Verstellglieder (3,8) gleichsinnig in der gleichen Richtung wie das Betätigungsteil (1) bewegen.

2. Steuerungseinrichtung nach Anspruch 1, dadurch gekennzeichnet, daß das Betätigungsteil (1) als zweiarmiger Hebel ausgeführt ist, dessen einer Arm mit einem der Verstellglieder (3) und dessen anderer Arm mit dem anderen Verstellglied (8) gelenkig verbunden ist, daß der zweiarmige Hebel (1) ein Gleitstück (23) aufweist, das in dem Führungsteil (24) verschiebbar gelagert ist, das auf einer Kreisbahn um eine zu der Drehachse (14) des Hebels (1) im wesentlichen parallelen, relativ zu dieser Drehachse (14) feststehenden Achse bewegbar und zu seiner Betätigung mit dem einen Stellteil (25) verbunden ist, um den Hebel (1) zu drehen, und daß der zweiarmige Hebel (1) an seiner Drehachse (14) mit einem ersten Schub- und Zugglied (22) drehbar verbunden ist, das zu seiner Betätigung mit dem anderen Stellteil (17) verbunden ist, wobei eine Verstellung des einen Stellteiles (17) das erste Schub- und Zugglied (22) verschiebt und infolgedessen den zweiarmigen Hebel (1) translatorisch bewegt, wobei er durch die Lagerung des Gleitstücks (23) in dem Führungsteil (24) geführt ist, und wobei eine Verstellung des einen Stellteiles (25) das Führungsteil (24) auf der Kreisbahn bewegt und infolgedessen den zweiarmigen Hebel (1) um seine Drehachse (14) dreht.

3. Steuerungseinrichtung nach Anspruch 2, dadurch gekennzeichnet, daß das Führungsteil (24) mit einem Schwenkhebel (26) verbundedn ist, der um die zu der Drehachse (14) des zweiarmigen Hebels (1) im wesentlichen parallelen, relativ zu dieser Drehachse (14) feststehenden Achse drehbar ist, und an einer von seiner Drehachse entfernten Stelle mit einem zweiten Schub- und Zugglied (27) verbunden ist, das seinerseits zu seiner Betätigung mit dem einen Stellteil (25) verbunden ist.

4. Steuerungseinrichtung nach einem der vorhergehenden Ansprüche, dadurch gekennzeichnet, daß das erste Schub- und Zugglied (22) mit einem um eine zu der Drehachse (14) des zweiarmigen Hebels (1) im wesentlichen parallelen Achse (21) drehbaren Getriebeteil (20) an einer von der Drehachse (21) des Getriebeteiles (20) entfernten Stelle gelenkig verbunden ist, das an einem Rand eine Reihe von Zähnen aufweist, in die ein drehbar gelagertes Ritzel (16) eingreift, das mit dem anderen Stellteil (17) drehfest verbunden ist.

5. Steuerungseinrichtung nach einem der vorhergehenden Ansprüche, dadurch gekennzeichnet, daß das andere Stellteil als Lenkvorrichtung (17) und das eine Stellteil als Fahrsteuerungsvorrichtung (25) ausgeführt ist.

6. Steuerungseinrichtung nach einem der Ansprüche 1 bis 4, dadurch gekennzeichnet, daß das andere Stellteil als Fahrsteuerungsvorrichtung und das eine Stellteil als Lenkvorrichtung ausgeführt ist.

7. Steuerungseinrichtung nach einem der vorhergehenden Ansprüche, dadurch gekennzeichnet, daß jede Antriebseinrichtung (6,10) aus einem eine Hydraulikpumpe (11) und einen Hydraulikmotor (12) aufweisenden hydrostatischen Getriebe besteht, dessen Drehzahl und dessen Drehrichtung durch das jeweilige Verstellglied (3,8) stufenlos regelbar bzw. einstellbar ist.

8. Steuerungseinrichtung nach einem der vorhergehenden Ansprüche, dadurch gekennzeichnet, daß sie bei einem Kraftfahrzeug mit zwei Triebrädern (4,9) und einem oder mehreren nicht angetriebenen Stützrädern (32) verwendet wird, die um eine senkrecht zu ihrer Drehachse verlaufenden Hochachse frei schwenkbar sind, die in Fahrtrichtung vor der Drehachse des oder der Stützräder (32) angeordnet ist.

**Claims**

1. A control system for driving and steering motor vehicles, there being provided individually drivable running gear on each longitudinal side of the vehicle, there being provided two drive systems (6, 10) variable by a respective moving adjusting element (3, 8) in the drive power output to the respective running gear and in the drive direction, there being provided two driver control elements (17, 25) connected to the two adjusting elements (3, 8) by way of an actuator (1) rotatable around its own rotational axis (14), the actuator (1) being drivable in rotation by one (25) of the driver control elements and being connected to the adjusting elements (3, 8) at two places apart from one another, such places moving to opposite hands in response to a rotation of the actuator (1) around its rotational axis (14), adjustment of one driver control element (17) causing rotation of the actuator (1) and movements of the adjusting elements (3, 8) in opposite directions while adjustment of the other driver control element (25) causes the adjusting elements (38) to move in the same direction as one another, characterised in that the actuator (1) together with its rotational axis (14) is movable in translation in a direction perpendicular to its rotational axis (14) by the other driver control element (17), the actuator (1) being guided by a guide member (24) drivable in rotation by the first driver control element (25), the adjusting elements (3, 8) both moving in the same direction as the actuator (1).

2. A system according to claim 1, characterised in that the actuator (1) is a two-armed lever, one arm of which is pivotally connected to one of the adjusting elements (3) and the other arm of which is connected to the other adjusting element (8), the lever (1) has a slide block (23) which is mounted for displacement in the guide (24), is movable on an orbit around an axis which is substantially parallel to the pivot spindle (14) and stationary relatively thereto and is connected for actuation to the first driver control element (25) in order to rotate around the lever (1), and the same is rotatably connected by way of its rotational axis (14) to a first push and pull element (22) connected for actuation to the second driver control element (17), a displacement thereof moving the first push and pull element (22) and, therefore, the lever (1) in translation, the same being guided by the mounting of the slide block (23) in the guide (24), an adjustment of the first driver control element (25) moving the guide (24) on its orbit and, therefore, rotating the lever (1) around its rotational axis (14).

3.  A system according to claim 2, characterised in that the guide (24) is connected to a pivoted lever (26) rotatable around the axis which extends substantially parallel to the rotational axis (14) and which is stationary relatively thereto, the guide (24) being connected, at a place remote from its rotational axis, to a second push and pull element (27) connected for actuation to the first driver controlled unit (25).

4.  A system according to any of the previous claims, characterised in that at a place remote from the rotational axis (21) of the transmission part (20), the first push and pull element (22) is pivotally connected to a transmission part (20) rotatable around the axis (21) which is substantially parallel to the rotational axis (14) of the lever (1), the part (20) having on one edge a row of teeth engaged by a rotatably mounted pinion (19) corotating with the second driver control element (17).

5.  A system according to any of the previous claims, characterised in that the second driver control element is a steering device (17) and the first driver control element is a vehicle movement control device (25).

6.  A system according to any of claims 1 to 4, characterised in that the second driver control element is a vehicle movement control device and the first driver control element is a steering device.

7.  A system according to any of the previous claims, characterised in that each drive device (6, 10) comprises a hydrostatic transmission having a hydraulic pump (11) and a hydraulic motor (12), the speed and direction of rotation of such transmission being steplessly controllable or adjustable by the corresponding adjusting element (3, 8).

8.  A system according to any of the previous claims, characterised in that it is used in a powered vehicle having two driving wheels (4, 9) and one or more undriven carrying wheels (32) freely pivotable around a vertical axis perpendicular to their axis of rotation, the vertical axis being disposed before, as considerd in the direction of travel, the rotational axis of the or each carrying wheel (32).

## Revendications

1.  Dispositif de commande pour la propulsion et la direction de véhicules automobiles ayant des trains de roulement placés sur chaque côté longitudinal du véhicule et actionnables individuellement, comportant deux dispositifs moteurs (6,10) associés chacun à un train de roulement, dont la puissance motrice fournie au train de roulement associé et le sens d'actionnement peuvent être modifiés par un élément mobile de réglage (3,8) associé à chacun, et deux éléments de commande (17,25) reliés chacun aux deux éléments de réglage (3,8) par un élément de manoeuvre (1) pouvant tourner autour d'un axe de rotation qui lui est propre, cet élément de manoeuvre (1) pouvant être tourné par l'un (25) des éléments de commande et étant relié, en deux points écartés l'un de l'autre, aux éléments de réglage (3,8), qui, lors d'une rotation de l'élément de manoeuvre (1) autour de son axe de rotation (14), se meuvent en sens contraires, et la manoeuvre de l'un (17) des éléments de commande produisant une rotation de l'élément de manoeuvre (1) et un mouvement en sens contraires des éléments de réglage (3,8) et la manoeuvre de l'autre élément de commande (25) produisant un mouvement dans le même sens des éléments de réglage (3,8), caractérisé par le fait que l'élément de manoeuvre (1) peut être déplacé en translation conjointement avec son axe de rotation (14) dans une direction perpendiculaire à cet axe (14) par l'autre élément de commande (17) en étant guidé par un élément de guidage (24) que le premier élément de commande (25) peut faire tourner, les éléments de réglage (3,8) se déplaçant alors dans le même sens dans la même direction que l'élément de manoeuvre (1).

2.  Dispositif de commande selon la revendication 1, caractérisé par le fait que l'élément de manoeuvre (1) est un levier à deux bras dont un bras est relié de manière articulée à l'un (3) des éléments de réglage et l'autre bras relié de manière articulée à l'autre élément de réglage (8), que ce levier à deux bras (1) présente une pièce de glissement (23) qui est montée mobile dans l'élément de guidage (24), qui est mobile sur une trajectoire circulaire autour d'un axe sensiblement parallèle à l'axe de rotation (14) du levier (1) et fixe par rapport à cet axe (14) et est relié pour son actionnement au premier élément de commande (25) pour faire tourner le levier (1), et que le levier à deux bras (1) est, à son axe de rotation (14), articulé à un premier élément de poussée et de traction (22) qui est relié pour son actionnement à l'autre élément de commande (17), une manoeuvre de cet élément de commande (17) produisant un déplacement du premier élément de poussée et de traction (22) et par suite une translation du levier à deux bras (1), celui-ci étant guidé par le montage de la pièce de glissement (23) dans l'élément de guidage (24), et une manoeuvre du premier élément de commande (25) produisant un mouvement de l'élément de guidage (24) sur la trajectoire circulaire et par suite une rotation du levier à deux bras (1) autour de son axe de rotation (14).

3.  Dispositif de commande selon la revendication 2, caractérisé par le fait que l'élément de guidage (24) est joint à un levier pivotant (26) qui peut tourner autour d'un axe sensiblement parallèle à l'axe de rotation (14) du levier à deux bras (1) et fixe par rapport à cet axe (14) et est joint en un point éloigné de son axe de rotation à un deuxième élément de poussée et de traction (27) qui est relié pour son actionnement au premier élément de commande (25).

4.  Dispositif de commande selon l'une des revendications précédentes, caractérisé par le fait que le premier élément de poussée et de traction (22) est articulé à un élément de transmission (20) pouvant tourner autour d'un axe (21) sensiblement parallèle à l'axe de rotation (14) du levier à deux bras (1) en un point écarté de cet axe de rotation (21), lequel élément de transmission (20) présente sur un bord une série de dents dans lesquelles s'engage un pignon tournant (19) solidaire en rotation de l'autre élément de commande (17).

5.  Dispositif de commande selon l'une des revendications précédentes, caractérisé par le fait que l'autre élément de commande est un dispositif de direction (17) et le premier élément de commande est un dispositif de commande de propulsion (25).

6.  Dispositif de commande selon l'une des revendications 1 à 4, caractérisé par le fait que l'autre élément de commande est un dispositif de commande de propulsion et le premier élément de commande est un dispositif de direction.

7.  Dispositif de commande selon l'une des revendications précédentes, caractérisé par le fait que chacun des dispositifs moteurs (6,10) est constitué d'une transmission hydrostatique présentant une pompe hydraulique (11) et un moteur hydraulique (12) et dont la vitesse de rotation peut être réglée de manière progressive et le sens de rotation fixé par l'élément de réglage (3,8) associé.

8.  Dispositif de commande selon l'une des revendications précédentes, caractérisé par le fait qu'il est utilisé sur un véhicule automobile à deux roues motrices (4,9) et une ou plusieurs roues de support non entraînées (32) qui peuvent pivoter librement autour d'un axe vertical perpendiculaire à leur axe de rotation et situé, dans le sens de la marche, en avant de l'axe de rotation de la ou des roues de support (32).

**Fig. 1**

Fig. 2

Fig. 3